# EUROPÄISCHE PATENTSCHRIFT

(11) **EP 0 994 087 B1**
(45) Veröffentlichungstag und Bekanntmachung des Hinweises auf die Patenterteilung: **21.06.2006**
(21) Anmeldenummer: 99119601.5
(22) Anmeldetag: 02.10.1999
(51) Int. Cl.: C06B 47/14, C08F 210/14

(54) **Sprengstoffe, enthaltend modifizierte Copolymere aus Polyisobutylen und Maleinsäureanhydrid als Emulgatoren**
Explosives containing modified copolymers made from polyisobutylene and maleic anhydride as emulsifier
Explosifs contenant des copolymères modifiés d'anhydride maléique et de polyisobutylène comme émulsifiant

(30) Priorität: 16.10.1998 DE 19847868
(43) Veröffentlichungstag der Anmeldung: 19.04.2000
(60) Teilanmeldung: 05000637.8
(73) Patentinhaber: Clariant Produkte (Deutschland) GmbH, 65929 Frankfurt am Main (DE)
(72) Erfinder: Klug, Peter, Dr., 63762 Grossostheim (DE); Bender, Ralf, 61440 Oberursel (DE)

(56) Entgegenhaltungen:
- EP-A- 0 330 375
- EP-A- 0 561 600
- EP-A- 0 657 475
- EP-A- 0 831 104
- WO-A-89/05848
- WO-A-90/03359
- AU-B- 618 156
- MACH H: "HIGHLY REACTIVE POLYISOBUTENE AS A COMPOSITION ELEMENT FOR A NEW GENERATION OF LUBRICANT ADDITIVES" OIL GAS, URBAN, HAMBURG, DE, Bd. 2, 1996, Seiten 38-40, XP001019758 ISSN: 0342-5622
- DATABASE WPI Section Ch, Week 198907 Derwent Publications Ltd., London, GB; Class A14, AN 1989-050519 XP002201091 & JP 64 000109 A (NIPPON OILS & FATS CO LTD), 5. Januar 1989 (1989-01-05)
- DATABASE WPI Section Ch, Week 199738 Derwent Publications Ltd., London, GB; Class A14, AN 1997-410821 XP002201092 & JP 09 183815 A (KURARAY CO LTD), 15. Juli 1997 (1997-07-15)

## Beschreibung

Unter den heute weltweit verwendeten Sprengstoffen sind die Ammoniumnitratsprengstoffe die größte Gruppe. Sie finden speziell im Bergbau weite Verbreitung. Eine besonders wichtige Gruppe unter den Ammoniumnitratsprengstoffen sind hierbei die Emulsionssprengstoffe, die im wesentlichen aus einer Wasser(bzw. Salz)-in-Öl-Emulsion einer bei Raumtemperatur übersättigten wäßrigen Lösung in einer Ölmatrix (fuel) bestehen. Die Ölphase ist die durchgehende Phase und umschließt kleine Tröpfchen übersättigter Lösung des Oxidationsmittels. Hierbei kann der Wassergehalt der Lösung bis unter 4 Gew.-% betragen. Die gelösten Salze sind metastabil und haben eine Tendenz zur Kristallisation. Bilden sich beispielsweise Ammoniumnitratkristalle, so hat dies ungünstige Auswirkungen auf die Emulsion (Verfestigung, die Emulsion ist nicht mehr pumpbar) als auch auf die Kapselempfindlichkeit der Emulsion, d.h. der Sprengstoff wird weniger sensibel gegenüber einer Initialzündung. Um eine solche Emulsion stabil zu halten, benötigt man daher im allgemeinen einen Emulgator, der sich zur Herstellung von Wasser-in-Öl-Emulsionen eignet. Er fördert aufgrund seiner Oberflächenaktivität die Emulgierung der Salzphase in kleinen Tröpfchen und behindert nach Bildung der Emulsion die Koaleszenz der gebildeten Tröpfchen.

Die Emulsion, auch Matrix genannt, ist im allgemeinen noch nicht zündbar, und deshalb muß zur Erreichung einer ausreichenden Kapselempfindlichkeit die Dichte der Matrix noch durch Zugabe von Glashohlkugeln (glas-bubbles), durch chemisches Aufgasen (gassing) oder auf anderem Wege, wie beispielsweise durch Zugabe gekörnten Ammoniumnitrats, verringert werden. Dann sind die Emulsionen u.U. auch ohne Booster mit Zündkapseln zündbar. Bei solchen Emulsionen handelt es sich um Sicherheitssprengstoffe. Diese Technik wurde erstmals in US-3 447 978 beschrieben.

US-3 447 978 offenbart Sprengstoffemulsionen, bestehend aus einer Salz-in-Öl-Emulsion einer übersättigten Ammoniumnitratlösung in einer Ölmatrix, wobei ein Emulgator des Wasser-in-Öl-Typs, z.B. ein Sorbitanester, Fettsäureglyceride oder Phosphorsäureester als Emulgatoren in Frage kommen. Diese Emulgatoren liefern aber nur Emulsionen mit geringer Langzeitstabilität.

EP-A-0 155 800 offenbart Emulsions-Explosivstoffgemische, die Emulgatoren enthalten, wobei mindestens ein Emulgator stark lipophil und ein Mittel zur Abänderung der elektrischen Leitfähigkeit der Emulsion ist, das im wesentlichen aus einem lipophilen und aus einem hydrophilen Anteil besteht, und bei dem der lipophile Bestandteil eine Kettenstruktur hat, die von einem Polymer eines 3-6 C-Atome enthaltenen Monoolefins abgeleitet ist. Speziell werden Umsetzungsprodukte von Poly(isobutenyl)bernsteinsäureanhydrid mit Aminoalkoholen, Aminen und Sorbitol als Emulgatoren beschrieben.

EP-A-0 285 608 offenbart Wasser in Öl-Emulsionen, wobei als Emulgatoren Umsetzungsprodukte aus einer kohlenwasserstoffsubstituierten Carbonsäure oder einem kohlenwasserstoffsubstituierten Anhydrid (oder einem davon abgeleiteten Ester oder Amid) mit Ammoniak oder mindestens einem Amin enthalten sind, wobei der Kohlenwasserstoffrest im Mittel 20-500 Kohlenstoffatome besitzt. Es werden keine Polymere mit mehreren KW-Resten offenbart. Im speziellen werden Umsetzungsprodukte von Poly(isobutenyl)bernsteinsäureanhydriden mit Morpholin und Aminoalkoholen beschrieben.

Die in EP-A-0 155 800 und EP-A-0 285 608 genannten Emulgatoren, die auf Polyisobutenylbernsteinsäureanhydrid (d.h. dem Umsetzungsprodukt aus einem langkettigen, verzweigten Olefin mit Maleinsäureanhydrid) basieren, ergeben im Gegensatz zu den in US-3 447 978 genannten Emulgatoren der ersten Generation sehr langzeitstabile Emulsionen. Die zugrundeliegenden Emulgatoren weisen aber den Nachteil auf, daß zu ihrer Synthese aufgrund der zugrundeliegenden En-Reaktion sehr hohe Temperaturen (180-230 °C) und relativ lange Reaktionszeiten nötig sind, was zu einem hohen Energieverbrauch und dementsprechend hohen Herstellkosten führt.

Auch gehören Polymere aus Polyisobutylen und Maleinsäureanhydrid zum Stand der Technik.

WO-A-90/03359 offenbart Polymere aus Polyisobutylen und Maleinsäureanhydrid, die nach Funktionalisierung mit Polyaminen als Additive in Kraftstoffen und Schmierölen Verwendung finden können. EP-A-0 831 104 offenbart Terpolymere aus Polyisobutylen, α-Olefinen und Maleinsäureanhydrid sowie Umsetzungsprodukte dieser Terpolymere mit Polyaminen für analoge Anwendungen.

Überraschenderweise wurde nun gefunden, daß sich nicht nur Derivate der monomeren Addukte aus Polyisobutylen und Maleinsäureanhydrid, sondern auch Derivate polymerer Addukte aus Maleinsäureanhydrid und Olefinen mit 20-500 C-Atomen, alleine oder in Mischung mit anderen Emulgatoren, als sehr wirkungsvolle Emulgatoren für Emulsionssprengstoffe eignen. Diese Produkte haben im Gegensatz zu den in EP-A-0 155 800 und EP-A-0 285 608 genannten Verbindungen mehrere hydrophobe Gruppen und mehrere hydrophile Kopfgruppen am Polymerrückgrat. Die zugrundeliegenden polymeren Anhydride können bei bedeutend niedrigerer Temperatur (80-150 °C) und durch radikalische Copolymerisation bedeutend schneller als die Alkenylbernsteinsäurederivate des Standes der Technik hergestellt werden, so daß sie sowohl ökologische als auch ökonomische Vorteile gegenüber dem Stand der Technik aufweisen. Überraschenderweise weisen die Produkte trotz der im Vergleich zu Polyisobutenylbernsteinsäurederivaten deutlich höheren Molekulargewichte keine erhöhten Viskositäten auf, so daß die Produkte trotz des höheren Molekulargewichtes problemlos zu handhaben sind. Dabei entspricht die Emulgierwirkung und Emulsionsstabilität der Produkte, insbesondere in Mischungen mit geringen Mengen von Coemulgatoren, mindestens der der im Stand der Technik genannten Produkte.

Gegenstand der Erfindung ist daher eine Sprengstoffzusammensetzung, bestehend aus
A) einem sauerstoffliefernden Bestandteil, der eine disperse Phase bildet,
B) einem organischen Bestandteil, der eine Dispersionsphase bildet, und
C) mindestens einem Emulgator,
dadurch gekennzeichnet, daß der Emulgator ein Copolymer, enthaltend in statistischer oder geregelter Abfolge Struktureinheiten, die sich von Maleinsäureanhydrid und von einem oder mehreren Olefinen mit mehr als 40 Kohlenstoffatomen ableiten, wobei die Struktureinheiten, die sich von Maleinsäureanhydrid ableiten, durch Reaktion mit Alkoholen, Aminoalkoholen, Ammoniak oder Aminen modifiziert sind, umfaßt.

Im folgenden bezeichnet "Maleinsäureanhydrid" auch das im oben angegebenen Sinne durch Reaktion mit Alkoholen, Aminoalkoholen, Ammoniak oder Aminen modifizierte Maleinsäureanhydrid.

Der erfindungsgemäße Sprengstoffemulgator enthält in der Copolymerkette mindestens ein Olefin, vorzugsweise ein α-Olefin mit mehr als 40, vorzugsweise von 40 bis 500, insbesondere 40 bis 200 Kohlenstoffatomen. Im Copolymer können darüber hinaus noch weitere Comonomere enthalten sein.

Geeignete Olefine für die Herstellung der erfindungsgemäßen Polymere sind Olefine mit bevorzugt α-ständiger Doppelbindung oder Mischungen verschiedener solcher Olefine. Besonders bevorzugt hierfür sind Olefine, die durch Polymerisation von C₂-C₆-Monoolefinen entstehen, wie z.B. Polypropylene oder Polyisobutylene im Molekulargewichtsbereich von vorzugsweise 200-5000 g/mol und enthalten > 30 %, bevorzugt > 50 %, besonders bevorzugt > 70 % Isomere mit α-ständiger Doppelbindung, d.h. z.B. mit einer Endgruppe R-C(=CH₂)CH₃. Solche Polyisobutylenqualitäten sind z.B. unter den Handelsnamen Glissopal® oder Ultravis® zu erhalten. Hierbei sind solche Polyisobutylene besonders geeignet, die einen hohen Anteil an Isomeren mit α-ständiger Doppelbindung aufweisen. Besonders geeignet als Olefinkomponenten sind auch Mischungen aus Polyisobutylenen und gerad- oder verzweigtkettigen C₁₀-C₃₀-α-Olefinen oder Mischungen aus Polyisobutylenen mit Alkylallylpolyglykolethem mit 3 bis 20 Ethylenoxideinheiten. Es bilden sich hierbei Terpolymere aus Polyisobutylen, Maleinsäureanhydrid und α-Olefin oder Allylmethylpolyglykolether. Die erwähnten Alkylallylpolyglykolether sind bevorzugt Allylmethylpolyglykolether im Molekulargewichtsbereich von 200 bis 1000 g/mol.

Die erfindungsgemäßen Sprengstoffemulgatoren können nach an sich bekannten Methoden synthetisiert werden, eine Beschreibung findet sich z.B. in Oil Gas European Magazine 1996, 22, 38-40. Man polymerisiert zunächst Olefine, bevorzugt α-Olefine, besonders bevorzugt Polyisobutylen oder Mischungen aus Polyisobutylen und kürzerkettigen C₁₀-C₃₀ α-Olefinen oder Mischungen aus Polyisobutylen mit Allylalkylpolyglykolethern und Maleinsäureanhydrid unter Verwendung eines geeigneten Radikalstarters. Das molare Mengenverhältnis zwischen Maleinsäureanhydrid und der Summe der anderen Comonomeren beträgt vorzugsweise von 0,7:1 bis 1,6:1. Die Polymerisation kann in Substanz, aber auch in einem nichtprotischen Lösungsmittel durchgeführt werden. Die Reaktionstemperatur der Polymerisation liegt zwischen 50 und 200 °C, bevorzugt zwischen 80 und 160 °C. Es bilden sich bevorzugt alternierende Copolymere aus Olefin und Maleinsäureanhydrid. Im zweiten Reaktionsschritt wird das entstehende Polymer in einer polymeranalogen Reaktion mit Alkoholen oder Aminoalkoholen zu polymeren Halbestern, mit Ammoniak und/oder Aminen und ggf. auch mit Aminoalkoholen zu polymeren Halbamiden oder Imiden umsetzt.

Geeignete Alkohole für die Funktionalisierung der Maleinsäureanhydrid-Copolymere zu Halbestern sind Monoalkohole mit 1-6 C-Atomen, z.B. Methanol, Ethanol, Propanole, Butanole oder Pentanole; ebenfalls sind Alkylpolyglykole geeignet.

Geeignete Aminoalkohole sind beispielsweise N,N-Dimethylaminoethanol, N,N-Diethylaminoethanol, N,N-Dibutylaminoethanol, 3-Dimethylaminopropanol, N-Hydroxyethylmorpholin, Monoethanolamin, Diethanolamin, Triethanolamin, 3-Aminopropanol, Isopropanolamin und 2-(2-Aminoethoxy)ethanol. Die Halbesterbildung wird bei 30 bis 150 °C, bevorzugt bei 50 bis 100 °C durchgeführt. Um Vernetzungsreaktionen zu vermeiden, sind Aminoalkohole mit tertiärem Aminstickstoff und einer Hydroxyfunktion wie Dimethylaminoethanol, Diethylaminoethanol oder N-Hydroxyethylmorpholin besonders bevorzugt.

Geeignete Amine für die Funktionalisierung der Maleinsäureanhydrid-Copolymere sind Monoamine mit primärer oder sekundärer Aminofunktion wie Methylamin, Ethylamin, Butylamin, Laurylamin, Cocosfettamin, Stearylamin, Dimethylamin, Diethylamin, Dibutylamin usw., aber auch Di- und Polyamine, z.B. 3-Dimethylaminopropylamin, 3-Diethylaminopropylamin oder 3-Morpholinopropylamin.

Bevorzugte Amine enthalten nur eine kondensationsfähige Alkohol- bzw. Aminogruppe, um ein Crosslinking der einzelnen Polymereinheiten zu verhindern. Mit den angeführten Aminen erhält man zum Halbamid funktionalisierte Olefin/MSA-Copolymere (MSA = Maleinsäureanhydrid) bei Reaktionstemperaturen von maximal 50-60 °C. Oberhalb von 50 °C setzt vermehrt Imidbildung ein, so daß man, falls man zum Imid funktionalisierte Olefin/MSA-Copolymere erhalten will, vorzugsweise im Temperaturbereich von ca. 50 bis ca. 150 °C arbeitet.

Die Umsetzungen zu den Halbestern, Halbamiden und Imiden können sowohl in Substanz, als auch in einem Lösungsmittel, bevorzugt dann in dem für die Bildung der Sprengstoffemulsion verwendeten Mineralöl durchgeführt werden. Letzteres ist besonders bevorzugt, falls die Viskosität des Emulgators dies erfordert.

Die erfindungsgemäßen Sprengstoffemulgatoren können mit allen gängigen Sprengstoffemulgatoren gemischt werden. Bevorzugte Mischkomponenten sind sowohl die in US-3 447 978 verwendeten Wasser-in-Öl-Emulgatoren, wie Sorbitanmonooleat, Glyceride, Phosphorsäureester usw., aber auch Amidamine/Imidazoline die durch Kondensation von Fettsäuren mit Polyaminen erhältlich sind. Besonders bevorzugt sind Mischungen der erfindungsgemäßen Sprengstoffemulgatoren mit den monomeren Emulgatoren, wie sie in EP-A-0 155 800 und EP-A-0 285 608 genannt sind, d.h. mit Derivaten von Alkenylbernsteinsäureanhydriden, wie Polyisobutenylbernsteinsäureanhydrid, d.h. Halbestern, Halbamiden, Imiden und Salzen hiervon mit Aminen und Alkalimetallen.

Die erfindungsgemäßen Sprengstoffemulgatoren sind für die Verwendung als Bestandteil C in den erfindungsgemäßen Sprengstoffzusammensetzungen (Emulsionssprengstoffen) geeignet.

Die Salzphase des Emulsionssprengstoffes (Bestandteil A) besteht aus einer übersättigten Lösung eines sauerstoffabspaltenden Salzes, wobei vorzugsweise Ammoniumnitrat verwendet wird. Als Zusätze können andere sauerstoffabgebende Salze, z.B. andere Nitrate wie Natrium- oder Kaliumnitrat sowie Perchlorate Verwendung finden.

Als Ölphase (Bestandteil B) benutzt man im allgemeinen Mineralöle, besonders paraffinische Mineralöle. Es ist auch möglich naphthenbasische Öle, Pflanzenöle, Altöl oder Dieselöl zu benutzen. Die eingesetzten Sprengstoffemulgatoren werden meist in der Ölphase vorgelöst. Die Sprengstoffemulgatoren können als Konzentrat (bis zu 100 % Wirksubstanz) aber auch als Lösung in einem geeigneten Öl eingesetzt werden, falls die Eigenviskosität des Sprengstoffemulgators zu hoch ist.

Weitere Hilfstoffe sind Konsistenzgeber wie Wachse, Paraffine oder Elastomere, falls patronierter Sprengstoff hergestellt werden soll, Produkte, die die Wasserbeständigkeit der Emulsion erhöhen sollen wie Siliconöle, aber auch weitere Emusionsstabilisatoren, Verdicker oder Antioxidantien , die die Alterung des Sprengstoffemulgators verhindern sollen.

Die Sprengstoffemulsion setzt sich im allgemeinen aus 20-97 Gew-%, bevorzugt 30-95 Gew.-%, besonders bevorzugt aus 70-95 Gew.-% der diskontinuierlichen Phase (d.h. vorwiegend Wasser und Ammoniumnitrat mit den sonstigen wasserlöslichen Additiven) zusammen, der Wassergehalt bewegt sich im Bereich von 2-30 %, bevorzugt im Bereich von 4-20 %. Die Ölphase (mit den darin gelösten Additiven) umfaßt ca. 1-20 Gew-% der Gesamtzusammensetzung, bevorzugt aber 1-10 %. Der Emulgatoranteil der Gesamtzusammensetzung liegt im Bereich von 0,2-5 Gew.-%, bevorzugt im Bereich von 0,4-3 %.

Zur Herstellung der Sprengstoffemulsionen benutzt man gängige Emulgierverfahren. Man stellt zunächst eine 80-100 °C warme, übersättigte Ammoniumnitratlösung (ggf. unter Zusatz weiterer wasserlöslicher oben angeführter Hilfstoffe) her und erwärmt solange, bis alle Feststoffe gelöst sind, ggf. kann man zur Entfernung unlöslicher Stoffe filtrieren. Parallel stellt man eine ebenfalls 50-100 °C warme Lösung des Emulgators in der Ölmatrix (ebenfalls unter Zusatz weiterer öllöslicher Hilfsstoffe wie Wachse, Paraffine, Antioxidationsmittel etc.) her. Sodann gibt man unter Rühren bevorzugt die Salzschmelze in die Öl/Emulgatormischung, aber auch die umgekehrte Fahrweise ist möglich. Kräftiges Nachrühren verstärkt hierbei die Emulsionsbildung. Das Einschleppen von Kristallisationskeimen in die Emulsion muß dabei vermieden werden. Anschließend gibt man ggf weitere Komponenten, wie Glashohlkugeln (glass bubbles), Feststoffe wie TNT, feste Brennstoffe wie Aluminium oder Schwefel, inerte Materialien wie Baryt oder Natriumchlorid oder ungelöstes Ammoniumnitrat zu und rührt, bis die Feststoffe homogen verteilt sind. Bei chemical gassing gibt man z.B. Thioharnstoff und Natriumnitrit zu, was innerhalb einer gewissen Zeit zum Aufgasen der Emulsion führt. Technisch kann der Emulgierschritt in speziellen Mischern und ggf. unter Verwendung statischer Mischelemente bewerkstelligt werden.

Bevorzugte Emulgatoren sind Terpolymere, enthaltend Monomereinheiten abgeleitet aus
A) einem Olefin mit mehr als 40 C-Atomen,
B) Maleinsäureanhydrid, und
C) einem Alkylallylpolyglykolether der Formel

   R-(OCH₂CH₂)ₙO-CH₂-CH=CH₂

   mit n = 3 - 20 und R=C₁-C₄-Alkyl.

Das Olefin hat vorzugsweise von 40 bis 500, insbesondere von 40 bis 200 Kohlenstoffatome. Es handelt sich vorzugsweise um ein a-Olefin, besonders bevorzugt um ein Polyisobuten. In einer besonders bevorzugten Ausführungsform handelt es sich um modifizierte Terpolymere, die durch polymeranaloge Umsetzung o.g Terpolymeren mit Alkoholen, Aminen und Aminoalkoholen erhalten werden. Die erfindungsgemäßen Terpolymere werden als Emulgatoren in Sprengstoffzusammensetzungen verwendet.

Besonders bevorzugte Terpolymere enthalten Monomereinheiten aus
A) 18 bis 70 mol-% Polyisobuten
B) 25 bis 80 mol-% Maleinsäureanhydrid
C) 2 bis 15 mol-% Allylpolyglykolether.

Wie die unten angeführten Versuchsbeispiele belegen, zeigen die erfindungsgemäßen, polymeren Emulgatoren allein oder insbesondere in Mischung mit anderen Emulgatoren wie z.B. Sorbitanestern gleiche Emulsionsstabilitäten im Vergleich zu einem konventionellen Polyisobutenylbernsteinsäurederivat. Interessant ist, daß die Funktionalisierung des polymeren Anhydrids, zumindest in Mischungen mit weiteren Emulgatoren, nicht unabdingbar notwendig ist. Unter den Bedingungen der Emulgierung bildet sich aus dem Anhydrid und Ammoniumnitrat vermutlich das entsprechende Amid in situ.

### Beispiele:

### Synthese des polymeren Emulgators

### Beispiel 1: Copolymer aus Maleinsäureanhydrid und Polyisobutylen

In einem 2l-Vierhalskolben mit Rührer wurden 900 g (0,90 mol) eines Polyisobutylens mit einem Molekulargewicht von 1000 g/mol und 88,2 g (0,90 mol) Maleinsäureanhydrid vorgelegt und auf 100 °C erhitzt. Dann wurde 3 x bis 100 mbar evakuiert und zur Inertisierung jeweils mit Stickstoff belüftet. Es wurde auf 115 °C erhitzt und 9,9 g (1 Gew.-%) Di-tert.-butylperoxid zugegeben. Die Reaktionsmischung wurde weiter auf 150 °C erhitzt, wobei sich die Reaktionstemperatur kurzfristig auf 160 °C erhöhte. Anschließend wurde 4 h bei 150 °C gehalten. Anschließend wurde bei 150 °C ein Vakuum von 20 mbar angelegt, es wurde allerdings kein Destillat erhalten. Nach Abkühlen wurden 986 g eines gelblichen Öl mit einer Viskosität von 4,1 Pas bei 80 °C (Bohlin, 10s⁻¹) erhalten. Molekulargewicht (GPC): Mn = 1608 g/mol, Mw = 3621 g/mol Restolefingehalt: 48 %

### Beispiel 2: Copolymer aus Maleinsäureanhydrid, Polyisobutylen und C₁₈-α-Olefin

In einem 1 1-Vierhalskolben mit Rührer wurden 600 g (0,60 mol) eines Polyisobutylens mit einem Molekulargewicht von 1000 g/mol, 50g (0,2mol) eines C₁₈-α-Olefins und 78,4 g (0,80 mol) Maleinsäureanhydrid vorgelegt und auf 100 °C erhitzt. Dann wurde 3 x bis 100 mbar evakuiert und zur Inertisierung jeweils mit Stickstoff belüftet. Es wurde auf 120 °C erhitzt und 7,3 g (1 Gew.-%) Di-tert.-butylperoxid zugegeben. Die Reaktionsmischung wurde weiter auf 150 °C erhitzt, wobei sich die Reaktionstemperatur kurzfristig auf 160 °C erhöhte. Anschließend wurde 4 h bei 150 °C gehalten. Anschließend wurde bei 150 °C ein Vakuum von 20 mbar angelegt, es wurde allerdings kein Destillat erhalten. Nach Abkühlen wurden 725,8 g eines orange-roten Öls mit einer Viskosität von 4,0 Pas bei 80 °C (Bohlin, 10s⁻¹) erhalten.

### Beispiel 3: Copolymer aus Maleinsäureanhydrid, Polyisobutylen und Allylmethylpolyglykolether mit einem Molekulargewicht von 334 g/mol

In einem 2 I-Vierhalskolben mit Rührer wurden 1200 g (1,20 mol) eines Polyisobutylens mit einem Molekulargewicht von 1000 g/mol, 133,6 g (0,4 mol) des Allylmethylpolyglykolethers und 156,8 g (1,60 mol) Maleinsäureanhydrid vorgelegt und auf 100 °C erhitzt. Dann wurde 3 x bis 100 mbar evakuiert und zur Inertisierung jeweils mit Stickstoff belüftet. Es wurde auf 120 °C erhitzt und 14,9 g (1 Gew.-%) Di-tert.-butylperoxid zugegeben. Die Reaktionsmischung wurde weiter auf 150 °C erhitzt, wobei sich die Reaktionstemperatur kurzfristig auf 155 °C erhöhte. Anschließend wurde 4 h bei 150 °C gehalten. Anschließend wurde bei 150 °C ein Vakuum von 30 mbar angelegt, es wurden 4,0 g Destillat erhalten. Nach Abkühlen wurden 1469,6 g eines gelblichen Öl mit einer Viskosität von 3,6 Pas bei 80 °C (Bohlin, 10s⁻¹) erhalten.
Molekulargewicht (GPC): Mn = 1540 g/mol, Mw = 3460 g/mol
Restolefingehalt: 52 %

### Beispiel 4: Umsetzung Beispiel 1 mit Diethylaminoethanol

In einem 2 1-Vierhalskolben mit Rührer wurden 312 g eines paraffinischen Mineralöls und 657 g des Copolymers aus Beispiel 1 vorgelegt und auf 90 °C erhitzt. Innerhalb 10 min wurden 70,3 g (0,6 mol) N,N-Diethylethanolamin zugetropft und 5 h bei 90 °C gerührt. Es wurden 1036 g eines gelben Öls erhalten.

### Beispiel 5: Umsetzung Beispiel 2 mit Diethylaminoethanol

In einem 2I-Vierhalskolben mit Rührer wurden 175,6 g eines paraffinischen Mineralöls und 362,9 g des Copolymers aus Beispiel 2 vorgelegt und auf 90 °C erhitzt. Innerhalb 10 min wurden 46,9 g (0,4 mol) N,N-Diethylethanolamin zugetropft und 5 h bei 90 °C gerührt. Es wurden 582,4 g eines braunen Öls erhalten.

### Beispiel 6: Umsetzung Beispiel 3 mit Diethylaminoethanol

In einem 2 I-Vierhalskolben mit Rührer wurden 355,1 g eines paraffinischen Mineralöls und 734,8 g des Copolymers aus Beispiel 3 vorgelegt und auf 90 °C erhitzt. Innerhalb 10 min wurden 93,8 g (0,6 mol) N,N-Diethylethanolamin zugetropft und 5 h bei 90 °C gerührt. Es wurden 1180,6 g eines rot-braunen Öls erhalten.

### Beispiel 7: Vergleichsbeispiel

Dieser Emulgator wurde durch Umsetzung eines Polyisobutenylbernsteinsäureanhydrids (Molekulargewicht des zugrundeliegenden Polyisobutens: 950 g/mol) mit einem Moläquivalent 2-Diethylaminoethanol bei 90 °C erhalten.

### Beispiel 8: Vergleichsbeispiel

Als Vergleichsemulgator wurde ein handelsübliches Sorbitanmonooleat verwendet.

### Beispiel 9: Vergleichsbeispiel

Dieser Emulgator wurde durch Kondensation von Tallölfettsäure und Triethylentetramin im Molverhältnis 3 : 1 bei 230 °C unter 20 mbar Vakuum erhalten.

### Beispiel 10:

Der Emulgator nach Beispiel 4 wurde im Massenverhältnis 80 : 20 (unter Berücksichtigung des Wirksubstanzgehaltes) mit dem Vergleichsemulgator nach Beispiel 7 gemischt und bei 60 °C homogenisiert.

### Beispiel 11:

Der Emulgator nach Beispiel 4 wurde im Massenverhältnis 80 : 20 (unter Berücksichtigung des Wirksubstanzgehaltes) mit dem Vergleichsemulgator nach Beispiel 8 gemischt und bei 60 °C homogenisiert.

### Beispiel 12:

Der Emulgator nach Beispiel 4 wurde im Massenverhältnis 50 : 50 (unter Berücksichtigung des Wirksubstanzgehaltes) mit dem Vergleichsemulgator nach Beispiel 7 gemischt und bei 60 °C homogenisiert.

### Beispiel 13:

Der Emulgator nach Beispiel 1 wurde im Massenverhältnis 50 : 50 (unter Berücksichtigung des Wirksubstanzgehaltes) mit dem Vergleichsemulgator nach Beispiel 7 gemischt und bei 60 °C homogenisiert.

### Beispiel 14:

Der Emulgator nach Beispiel 5 wurde im Massenverhältnis 50 : 50 (unter Berücksichtigung des Wirksubstanzgehaltes) mit dem Vergleichsemulgator nach Beispiel 7 gemischt und bei 60 °C homogenisiert.

### Beispiel 15:

Der Emulgator nach Beispiel 6 wurde im Massenverhältnis 50 : 50 (unter Berücksichtigung des Wirksubstanzgehaltes) mit dem Vergleichsemulgator nach Beispiel 7 gemischt und bei 60 °C homogenisiert.

### Beispiel 16:

Der Emulgator nach Beispiel 4 wurde im Massenverhältnis 90 : 10 (unter Berücksichtigung des Wirksubstanzgehaltes) mit dem Vergleichsemulgator nach Beispiel 8 gemischt und bei 60 °C homogenisiert.

### Beispiel 17:

Der Emulgator nach Beispiel 4 wurde im Massenverhältnis 90 : 10 (unter Berücksichtigung des Wirksubstanzgehaltes) mit dem Vergleichsemulgator nach Beispiel 7 gemischt und bei 60 °C homogenisiert.

### Beispiel 18:

### Copolymer aus Maleinsäureanhydrid und Polyisobuten:

In einem 2 I-Vierhalskolben mit Rührer wurden unter Stickstoffatmosphäre 700 g (0,70 mol) eines Polyisobutylens mit einem Molekulargewicht von 1000 g/mol, 500 g 1,2-Dichlorethan, 68,6 g (0,70 mol) Maleinsäureanhydrid und 7,7 g tert.-Butylperbenzoat vorgelegt und auf 80°C erhitzt. Die Reaktionsmischung lag hierbei als klare Lösung vor. Anschließend wurde 33 h bei 80°C gehalten. Dann wurde bei 150°C und einem maximalen Vakuum von 20 mbar 1,2-Dichlorethan und überschüssiges Maleinsäureanhydrid abdestilliert. Nach Abkühlen wurden 745 g eines gelblichen, hochviskosen Öls erhalten.
Molekulargewicht (GPC): Mn = 1949 g/mol, Mw = 5081 g/mol.
Restolefingehalt: 66 %

### Beispiel 19:

### Copolymer aus Maleinsäureanhydrid und Polyisobuten:

In einem 2 1-Vierhalskolben mit Rührer wurden unter Stickstoffatmosphäre 800 g (0,80 mol) eines Polyisobutylens mit einem Molekulargewicht von 1000 g/mol, 545 g Xylol, 78,4 g (0,80 mol) Maleinsäureanhydrid und 8,8 g tert.-Butylperbenzoat vorgelegt und auf 80 °C erhitzt. Die Reaktionsmischung lag hierbei als klare Lösung vor. Anschließend wurde 30 h bei 80 °C gehalten. Dann wurde bei maximal 200°C und einem maximalen Vakuum von 20 mbar Xylol und überschüssiges Maleinsäureanhydrid abdestilliert. Nach Abkühlen wurden 869 g eines gelblichen, hochviskosen Öls erhalten.
Moleulargewicht (GPC): Mn = 1820 g/mol , Mw = 4520 g/mol
Restolefingehalt: 56 %

### Beispiel 20:

### Copolymer aus Maleinsäureanhydrid und Polyisobuten:

In einem 2 1-Vierhalskolben mit Rührer wurden 1000 g (1,00 mol) eines Polyisobutylens mit einem Molekulargewicht von 1000 g/mol, 127,4 g (1,30 mol) Maleinsäureanhydrid und 538 g Xylol vorgelegt, auf 100 °C erwärmt und zur Inertisierung 3 x bis auf ein Vakuum von 300 mbar evakuiert und mit Stickstoff belüftet. Bei 120 °C wurden innnerhalb 5 min 11,3 g Di-tert.-Butylperoxid zudosiert und die Reaktionsmischung auf 145 °C (Rückfluß) erhitzt. Anschließend wurde 4 h bei dieser Temperatur gehalten. Dann wurde bei maximal 200 °C und einem maximalen Vakuum von 20 mbar Xylol und überschüssiges Maleinsäureanhydrid abdestilliert. Nach Abkühlen wurden 1137 g eines gelblichen, hochviskosen Öls erhalten.
Molekulargewicht (GPC): Mn = 1352 g/mol, Mw = 2520 g/mol
Restolefingehalt: 38,5 %

### Beispiel 21:

### Umsetzung Beispiel 18 mit Diethylethanolamin:

In einem 1 1-Vierhalskolben mit Rührer wurden 270 g eines paraffinischen Mineralöls und 571 g des Copolymers aus Beispiel 18 vorgelegt und auf 90 °C erhitzt. Innerhalb 10 min wurden 58,6 g (0,5 mol) N,N-Diethylethanolamin zugetropft und 5 h bei 90°C gerührt. Es wurden 896 g eines gelben Öls erhalten.

### Beispiel 22:

### Umsetzung Beispiel 19 mit Diethylethanolamin:

In einem 2 1-Vierhalskolben mit Rührer wurden 305 g eines paraffinischen Mineralöls und 654 g des Copolymers aus Beispiel 19 vorgelegt und auf 90 °C erhitzt. Innerhalb 10 min wurden 58,6 g (0,5 mol) N,N-Diethylethanolamin zugetropft und 5 h bei 90 °C gerührt. Es wurden 1015 g eines gelben Öls erhalten.

### Beispiel 23:

### Umsetzung Beispiel 20 mit Diethylethanolamin:

In einem 1 I-Vierhalskolben mit Rührer wurden 212 g eines paraffinischen Mineralöls und 437 g des Copolymers aus Beispiel 20 vorgelegt und auf 90°C erhitzt. Innerhalb 10 min wurden 58,6 g (0,5 mol) N,N-Diethylethanolamin zugetropft und 5 h bei 90°C gerührt. Es wurden 701 g eines gelben, klaren Öls erhalten.

### Beispiel 24:

Der Emulgator nach Beispiel 21 wurde im Massenverhältnis 50 : 50 mit dem Vergleichsemulgator nach Beispiel 7 gemischt und bei 60 °C homogenisiert.

### Beispiel 25:

Der Emulgator nach Beispiel 22 wurde im Massenverhältnis 50 : 50 mit dem Vergleichsemulgator nach Beispiel 7 gemischt und bei 60 °C homogenisiert.

### Beispiel 26:

Der Emulgator nach Beispiel 23 wurde im Massenverhältnis 50 : 50 mit dem Vergleichsemulgator nach Beispiel 7 gemischt und bei 60 °C homogenisiert.

### Bestimmung der Molekulargewichte der Basispolymere (Beispiele 1-3, 18-20):

Die Molekulargewichte wurden durch Gelpermeationschromatographie (GPC) mit Tetrahydrofuran als Eluens gegen Polyisobuten als Standard bestimmt; angegeben wurden die Werte für Mn und Mw. Die Molekulargewichtsbestimmungen schließen das im polymeren Anhydrid enthaltene unumgesetzte Polyisobuten mit ein. Die tatsächlichen Molekulargewichte des polymeren Anhydrids liegen dementsprechend bedeutend höher.

### Bestimmung des Restolefingehaltes (Beispiele 1-3, 18-20):

Ca. 5-10 g der polymeren Anhydride wurde über 100 g Kieselgel 60 mit Pentan als Eluens chromatographiert. Das Restolefin wird hierbei mit einem R_{F} -Wert von ca. 0,9 eluiert. Die entsprechenden Fraktionen wurden vereinigt, das Lösungsmittel abdestilliert und der Rückstand ausgewogen.

### Herstellung der Testemulsion

Die verwendete Testemulsion besitzt folgende Zusammensetzung:
1,0 g Emulgator (100% Wirksubstanz ohne Berücksichtigung des Ölgehalts)
6,3 g Weißöl
81,0 g Ammoniumnitrat
12,0 g Wasser

Das Weißöl mit Emulgator wird bei 80°C im einem hohen 250 ml Becherglas vorgelegt und unter Rühren mit einem wandgängigen VA-Ankerrührer und unter steigender Rührgeschwindigkeit von 800 bis 2000 U/min die klare, heiße Ammoniumnitrat/Wasser-Schmelze mit einer Temperatur von 95 bis 98°C eingetragen. Die Schmelze wird am Anfang tropfenweise und dann in 15 sek. im Schuß aus einem enghalsigen 100 ml Erlenmeyerkolben so zugegeben, daß sie in der Mitte des Rührblatts verrührt werden kann, die Schmelze darf dabei nicht an der Wandung erstarren. Die entstandene, transparente Emulsion wird 3 bis 5 min bei 80°C nachgerührt und noch heiß (ohne evtl. entstandene Kristalle) abgefüllt.

### Emulsionsstabilität

Die hergestellten Emulsionen wurden a) bei Raumtemperatur (ca. 20-25 °C) als auch b) durch Temperaturwechsellagerung (jeweils im Wechsel 24 h bei 0°C und 40 °C) auf ihre Lagerstabilität untersucht. Die Beurteilung erfolgte visuell; die Emulsion wurde nicht mehr als stabil angesehen, wenn sich visuell sichtbar Kristallkeime gebildet hatten.

| Emulgator | Lagerstabilität bei RT (d) | Lagerstabilität bei Temperaturwechsellagerung (d) | Polymer-Komponente | Additiv | Mischungsverhältnis |
|---|---|---|---|---|---|
| Beispiel 1 0 0 | | | | | |
| Beispiel 2 | 0 | 0 | | | |
| Beispiel 3 0 0 | | | | | |
| Beispiel 4 | >30 | 2 | | | |
| Beispiel 5 | >30 | 2 | | | |
| Beispiel 6 | 0 | 0 | | | |
| Beispiel 7 (Vergl.) | > 30 | > 30 | | | |
| Beispiel 8 (Vergl.) | 6 | 4 | | | |
| Beispiel 9 (Vergl.) | 6 | 1 | | | |
| Beispiel 10 | >30 | >30 | Beispiel 4 | Beispiel 7 | 80:20 |
| Beispiel 11 | >30 | >30 | Beispiel 4 | Beispiel 8 | 80 : 20 |
| Beispiel 12 | >30 | >30 | Beispiel 4 | Beispiel 7 | 50: 50 |
| Beispiel 13 | >30 | >30 | Beispiel 1 | Beispiel 7 | 50: 50 |
| Beispiel 14 | >30 | >30 | Beispiel 5 | Beispiel 7 | 50: 50 |
| Beispiel 15 | >30 | >30 | Beispiel 6 | Beispiel 7 | 50: 50 |
| Beispiel 16 | >30 | >30 | Beispiel 4 | Beispiel 8 | 90: 10 |
| Beispiel 17 | >30 | >30 | Beispiel 4 | Beispiel 7 | 90: 10 |
| Beispiel 24 | > 30 | > 30 | Beispiel 21 | Beispiel 7 | 50 : 50 |
| Beispiel 25 | > 30 | > 30 | Beispiel 22 | Beispiel 7 | 50 : 50 |
| Beispiel 26 | > 30 | > 30 | Beispiel 23 | Beispiel 7 | 50 : 50 |

## Patentansprüche

1. Sprengstoffzusammensetzung, bestehend aus
A) einem sauerstoffliefernden Bestandteil, der eine disperse Phase bildet,
B) einem organischen Bestandteil, der eine Dispersionsphase bildet, und
C) mindestens einem Emulgator,
**dadurch gekennzeichnet, daß** der Emulgator ein Copolymer, enthaltend in statistischer oder geregelter Abfolge Struktureinheiten, die sich von Maleinsäureanhydrid und von einem oder mehreren Olefinen mit mehr als 40 Kohlenstoffatomen ableiten, wobei die Struktureinheiten, die sich von Maleinsäureanhydrid ableiten, durch Reaktion mit Alkoholen, Aminoalkoholen, Ammoniak oder Aminen modifiziert sind, umfaßt.

2. Sprengstoffzusammensetzung nach Anspruch 1, **dadurch gekennzeichnet, daß** die Zusammensetzung ein alternierendes Copolymer aus mindestens einem Olefin mit ca. 40 - 500 Kohlenstoffatomen und Maleinsäureanhydrid enthält, das mit a) Alkoholen, b) Aminoalkoholen, c) Ammoniak oder d) Aminen modifiziert ist.

3. Sprengstoffzusammensetzung nach Anspruch 1 und/oder 2, **dadurch gekennzeichnet, daß** das Olefin ein Polymer aus kurzkettigen Olefinen mit 2 - 6 Kohlenstoffatomen ist.

4. Sprengstoffzusammensetzung nach Anspruch 3, **dadurch gekennzeichnet, daß** das kurzkettige Olefin Buten oder ein Butenisomer ist.

5. Sprengstoffzusammensetzung nach einem oder mehreren der Ansprüche 1 bis 4, **dadurch gekennzeichnet, daß** als Olefin eine Mischung aus Polyisobutylen und einem C₁₀-C₃₀-α-Olefin verwendet wird.

6. Sprengstoffzusammensetzung nach einem oder mehreren der Ansprüche 1 bis 5, **dadurch gekennzeichnet, daß** das Copolymer einen Alkylallylpolyglykolether mit 3 -20 Ethylenoxideinheiten als weiteres Comonomeres enthält.

7. Sprengstoffzusammensetzung nach einem oder mehreren der Ansprüche 1 bis 6, **dadurch gekennzeichnet, daß** das Polymer aus Maleinsäureanhydrid und Olefinen mit einem Aminoalkohol zum Halbester oder einem Salz des Halbesters umgesetzt wird.

8. Sprengstoffzusammensetzung nach Anspruch 7, **dadurch gekennzeichnet, daß** der Aminoalkohol 2-Dimethylaminoethanol oder 2-Diethylaminoethanol ist.

9. Sprengstoffzusammensetzung nach einem oder mehreren der Ansprüche 1 bis 8, **dadurch gekennzeichnet, daß** als Co-Emulgator ein Derivat eines Alkenylbernsteinsäureanhydrids verwendet wird.

10. Sprengstoffzusammensetzung nach Anspruch 9, **dadurch gekennzeichnet, daß** es sich bei dem Derivat eines Alkenylbernsteinsäureanhydrids um ein Derivat eines Polyisobutenylbernsteinsäureanhydrids handelt.

11. Sprengstoffzusammensetzung nach einem oder mehreren der Ansprüche1 bis 9, **dadurch gekennzeichnet, daß** als Co-Emulgator Sorbitanester, Imidazoline, Phosphorsäureester oder Fettsäureester verwendet werden.

## Claims

1. An explosive composition consisting of
A) an oxygen-donating constituent, which forms a disperse phase,
B) an organic constituent, which forms a dispersion phase, and
C) at least one emulsifier,
wherein the emulsifier includes a copolymer comprising, in random or regular order, structural units derived from maleic anhydride and from one or more olefins having more than 40 carbon atoms, where the structural units derived from maleic anhydride have been modified by reaction with alcohols, aminoalcohols, ammonia or amines.

2. An explosive composition as claimed in claim 1, wherein the composition comprises an alternating copolymer of at least one olefin having ca. 40 - 500 carbon atoms and maleic anhhydride which has been modified with a) alcohols, b) aminoalcohols, c) ammonia or d) amines.

3. An explosive composition as claimed in claim 1 and/or 2, wherein the olefin is a polymer of short-chain olefins having 2 - 6 carbon atoms.

4. An explosive composition as claimed in claim 3, wherein the short-chain olefin is butene or a butene isomer.

5. An explosive composition as claimed in one or more of claims 1 to 4, wherein the olefin used is a mixture of polyisobutylene and a C₁₀-C₃₀-α-olefin.

6. An explosive composition as claimed in one or more of claims 1 to 5, wherein the copolymer comprises an alkylallyl polyglycol ether having 3 - 20 ethylene oxide units as further comonomer.

7. An explosive composition as claimed in one or more of claims 1 to 6, wherein the polymer of maleic anhydride and olefins is reacted with an aminoalcohol to give the half-ester or a salt of the half-ester.

8. An explosive composition as claimed in claim 7, wherein the aminoalcohol is 2-dimethylaminoethanol or 2-diethylaminoethanol.

9. An explosive composition as claimed in one or more of claims 1 to 8, wherein the coemulsifier used is a derivative of an alkenylsuccinic anhydride.

10. An explosive composition as claimed in claim 9, wherein the derivative of an alkenylsuccinic anhydride is a derivative of a polyisobutenylsuccinic anhydride.

11. An explosive composition as claimed in one or more of claims 1 to 9, wherein the coemulsifier used is a sorbitan ester, imidazolines, phosphoric ester or fatty acid ester.

## Revendications

1. Composition explosive constituée
A) d'un constituant générateur d'acide, qui forme une phase dispersée,
B) d'un constituant organique qui forme une phase en dispersion, et
C) d'au moins un émulsifiant,
**caractérisée en ce que** l'émulsifiant comprend un copolymère contenant selon une séquence statistique ou réglée des motifs structuraux qui dérivent de l'anhydride maléique et d'une ou plusieurs oléfines ayant plus de 40 atomes de carbone, les motifs structuraux qui dérivent de l'anhydride maléique étant modifiés par réaction avec des alcools, des aminoalcools, de l'ammoniac ou des amines.

2. Composition explosive selon la revendication 1, **caractérisée en ce que** la composition contient un copolymère alterné constitué d'au moins une oléfine ayant d'environ 40 à 500 atomes de carbone et d'anhydride maléique, qui est modifié a) par des alcools, b) par des aminoalcools, c) par de l'ammoniac ou d) par des amines.

3. Composition explosive selon la revendication 1 et/ou 2, **caractérisée en ce que** l'oléfine est un polymère constitué d'oléfines à courte chaîne ayant 2 à 6 atomes de carbone.

4. Composition explosive selon la revendication 3, **caractérisée en ce que** l'oléfine à courte chaîne est le butène ou un isomère du butène.

5. Composition explosive selon l'une ou plusieurs des revendications 1 à 4, **caractérisée en ce que** l'oléfine est un mélange de polyisobutylène et d'une α-oléfine en C₁₀-C₃₀.

6. Composition explosive selon l'une ou plusieurs des revendications 1 à 5, **caractérisée en ce que** le copolymère contient en tant qu'autre comonomère un alkylallylpolyglycoléther ayant 3 à 20 motifs oxyde d'éthylène.

7. Composition explosive selon l'une ou plusieurs des revendications 1 à 6, **caractérisée en ce que** le polymère de l'anhydride maléique et d'oléfines est mis à réagir avec un aminoalcool pour donner le semi-ester ou un sel du semi-ester.

8. Composition explosive selon la revendication 7, **caractérisée en ce que** l'aminoalcool est le 2-diméthylaminoéthanol ou le 2-diéthylaminoéthanol.

9. Composition explosive selon l'une ou plusieurs des revendications 1 à 8, **caractérise en ce qu'**on utilise en tant que co-émulsifiant un dérivé d'un anhydride alcénylsuccinique.

10. Composition explosive selon la revendication 9, **caractérisée en ce que**, pour ce qui concerne le dérivé d'un anhydride alcénylsuccinique, il s'agit d'un dérivé d'un anhydride polyisobuténylsuccinique.

11. Composition explosive selon l'une ou plusieurs des revendications 1 à 9, **caractérise en ce qu'**on utilise en tant que co-émulsifiant des esters du sorbitan, des imidazolines, des esters de l'acide phosphorique ou des esters d'acides gras.
